# EUROPÄISCHE PATENTANMELDUNG

(11) **EP 1 677 090 A1**
(43) Veröffentlichungstag der Anmeldung: **05.07.2006**
(21) Anmeldenummer: 05028605.3
(22) Anmeldetag: 28.12.2005
(51) Int. Cl.: G01L 19/06, G01L 9/00

(54) **Drucksensor**

(30) Priorität: 30.12.2004 DE 102004063598
(71) Anmelder: Trafag AG, 8708 Männedorf (CH)
(72) Erfinder: Zeisel, Dieter, 8127 Forsch (CH); Merhar, Thomas, 8708 Männedorf (CH)
(74) Vertreter: Kastel, Stefan

(57) **Zusammenfassung**

Die Erfindung betrifft einen Drucksensor (1) mit:
einer aus Nichtmetall gebildeten Membran (5), welche mit unter Druck stehendem, zu messendem Medium beaufschlagbar ist, und insbesondere einen Drucksensor mit Keramikzelle (2). Um den Drucksensor (1) bei Beibehaltung der kostengünstigen Bauart universeller für verschiedene Medien und Temperaturbereiche bei verwendbar zu gestalten wird erfindungsgemäß vorgeschlagen, dass ein dem zu messenden Medium ausgesetzter Nichtmetall-Metall-Übergang (17) durch eine Hartlotverbindung (18) oder Aktivlotverbindung druckdicht abgeschlossen ist.

## Beschreibung

Die Erfindung betrifft einen Drucksensor mit einer aus Nichtmetall gebildeten Membran, welche mit unter Druck stehendem, zu messendem Medium beaufschlagbar ist, sowie ein Verfahren zum Herstellen eines solchen Drucksensors.

Drucksensoren werden auf ganz unterschiedlichen Messgebieten eingesetzt, um den Druck von ganz verschiedenen Fluiden zu messen. Es gibt Anwendungen in Motoren, um den Druck von Ölen, wie zum Beispiel Hydrauliköl oder Motoröl, den Brennstoffdruck oder auch den Brennraumdruck zu messen. Es gibt Anwendungen in industriellen Prozessen, um ganz unterschiedliche Medien bei ganz unterschiedlichen Temperaturen und Drücken zu messen.

Viele der zu messenden Medien sind chemisch aggressiv oder - zum Beispiel in der Lebensmittelindustrie - empfindlich gegen Verschmutzungen, was auch bei der Auswahl eines Drucksensors zum Messen des Mediumdrucks beachtet werden muss.

Als besonders medienkompatibel hat sich ein Drucksensor herausgestellt, bei dem diejenigen Teile, die mit dem Medium in Berührung kommen, ganz aus nichtkorrosivem Stahl gebildet sind. Beispielsweise besteht bei diesen Medien auch eine druckaufnehmende Membran ganz aus medienunempfindlichen Stahl wie beispielsweise Edelstahl. Solche Drucksensoren sind jedoch relativ aufwändig und damit teuer.

Andererseits gibt es gerade in jüngster Zeit vermehrt Drucksensoren mit Nichtmetallmembranen auf dem Markt. Hierzu zählen insbesondere Drucksensoren, die ganz aus Keramik gebildete Messzellen aufweisen. Bei einigen auf den Markt erhältlichen Keramik-Messzellen gibt es direkt auf den integral an den Messzellen ausgebildeten Keramikmembranen eine Auswerteschaltung, die die Auslenkung der Keramik-Membran in ein elektrisch verwertbares Signal umwandeln kann. Zum Beispiel sind auf der Membran Dehnmessstreifen (DMS) in Dickschichttechnik aufgebracht, deren elektrischer Widerstand sich bei Membranauslenkung verändert.

Beispiele für bekannte, derzeit auf dem Markt erhältliche Drucksensoren mit Keramikmesszellen, die den Oberbegriff des hier beigefügten Anspruches 1 bilden, sind die Drucksensoren vom Typ SEN 8600, SEN 8601, SEN 8700, SEN 8701 der deutschen Firma Kobold Messring GmbH aus D-65719 Hofheim/Taunus oder der Drucksensor FlexBar 3501 der Schweizer Firma Bourdon-Haenni AG in CH-3303 Jegenstorf. Aus dem Internet am 30.12.2004 ausgedruckte Datenblätter dieser Sensoren sind der Anmeldung beigefügt. Es wird für weitere Einzelheiten auf diese Datenblätter verwiesen.

Die zum Aufbau von Keramikmesszellen verwendeten Keramiken sind kostengünstig herstellbar und verarbeitbar und außerdem chemisch gut resistent. Dementsprechend werden mit Keramikzellen arbeitende Drucksensoren auch für die Messung aggressiver Medien angeboten. Allerdings lassen sich bisher mit aus solchen Keramiken oder vergleichbaren Nichtmetallen gebildeten Messzellen oder auch nur einzelnen Membranen bisher kaum für verschiedene Medien und verschiedene Temperaturbereiche geeignete Drucksensoren herstellen, vielmehr sind die bisherigen Nichtmetall-Membran-Drucksensoren allenfalls für eine ganz bestimmte Gruppe von aggressiven Medien und für bestimmte enge Temperaturbereiche ausgelegt.

Es ist zwar auch bereits bekannt, die Druckaufnehmer durch eine Trennmembran vom zu messenden Medium zu trennen, um den Sensor so universeller medienkompatibel zu machen, dies erhöht aber wieder die Bauteile und somit die Kosten. Außerdem werden die Messungen durch die indirekte Erfassung der Auslenkung einer Trennmembran nicht gerade genauer.

Aufgabe der Erfindung ist es, einen kostengünstigen medienkompatiblen Drucksensor zu schaffen, der ohne spezielle Anpassung universal, zum Beispiel auch in hohen Temperaturbereichen und bei chemisch verschieden aggressiven Medien, einsetzbar ist.

Diese Aufgabe wird durch einen Drucksensor gemäß Anspruch 1 gelöst.

Ein vorteilhaftes Verfahren zum Herstellen eines solchen Sensors ist in dem Nebenanspruch angegeben.

Vorteilhafte Ausgestaltungen der Erfindung sind Gegenstand der Unteransprüche.

Die Erfinder haben erkannt, dass eine Schwachstelle bisheriger Drucksensoren mit Nichtmetall-Membranen die Abdichtung eines zum Aufnehmen des zu messenden Mediums dienenden Raumes an Trennstellen, wie insbesondere an einer Nichtmetall-Metall-Trennstelle, ist. Bisher wurden hier zur Abdichtung zwingend elastomere Dichtungen, meist in Form von O-Ringen eingesetzt. Hierbei wurden enorme Anstrengungen angestellt, um diese Dichtungen oder O-Ringe medienkompatibel zu machen. Dies gelang bei den eingesetzten Elastomeren jedoch nur fallbezogen. Die Dichtungen und O-Ringe sind zum Beispiel entweder gegen ölhaltige Stoffe (zum Beispiel Benzin) oder gegen kalkhaltige Medien (zum Beispiel kalkhaltiges Wasser) resistent. Außerdem sind die Einsatzbereiche solcher Dichtungen oder O-Ringe auf relativ geringe Temperaturen begrenzt. Gelingt es, die Dichtungen für größere Temperaturen auszulegen, so geschieht dies meist auf Kosten der Medienkompatibilität. Andere bekannte Abdichtungsarten sind nur zu weitaus höheren Kosten möglich, so dass der wesentlichste Vorteil einer Nichtmetallzelle, wie insbesondere einer Keramikzelle, wieder zu nichte gemacht wird und man auch gleich auf die kostenaufwändigeren Stahlsensoren zurückgreifen könnte.

Bei der Erfindung wird hingegen eine Trennstelle zwischen Metall und Nichtmetall durch eine stoffschlüssige Verbindung, nämlich insbesondere durch Aktivlöten oder Hartlöten abgedichtet. Nichtmetalle, insbesondere Keramiken, und Metalle lassen sich durch Hartlot sehr fest miteinander verbinden. Erfolgt ein solches Hartlöten rundherum um die Membran oder an einem ringförmigen, dem Druckmedium ausgesetzten Übergang zwischen Metall und Nichtmetall, so lässt sich hierdurch einerseits die Verbindung zwischen Membran und Trägerelement herstellen, andererseits aber gleichzeitig auch die Abdichtung bewirken. O-Ringe und zusätzliche Spannelemente, die die Membran oder die Messzelle festhalten und den O-Ring zum Abdichten zusammendrücken, können entfallen. Beide Aufgaben können durch ein Hart- oder Aktivlot bewerkstelligt werden. Die Anzahl von Bauteilen wird dadurch minimiert.

Das zum Abdichten erfolgende Aktiv- oder Hartlöten erfolgt zum Beispiel zwischen einer Keramikmembran oder Keramikzelle und einem meist aus Metall gebildeten Druckanschlusselement. Solche Druckanschlusselemente weisen meist an einem zum Medieneinlass offenen Ende ein Außengewinde auf und sind oft mit einem Werkzeugangriff wie z.B. Sechskant versehen. Sie werden in Anschlussbohrungen an einer das zu messende Medium enthaltenden Vorrichtung eingedreht.

Gemäß einer Ausführungsform kann die Nichtmetallmembran oder deren aus Nichtmetall gebildete Trägerstruktur, also beispielsweise ein einstückig mit der Membran ausgebildeter Stützring, unmittelbar auf das dem Anschlussende abgewandte Ende des metallenen Druckanschlusselements druckdicht hartgelötet werden. Eine innere Durchgangsbohrung in dem Druckanschlusselement wird so an diesem Ende durch das Auflöten der Nichtmetallmembran druckdicht verschlossen, so dass das Druckanschlusselement und die Nichtmetallmembran, gegebenenfalls zusammen mit der kompletten Nichtmetallmesszelle, den mit zu messenden Medium befüllbaren Messraum bilden. Die Trennstelle oder der Übergang zwischen dem Metall des Druckanschlusselements und dem Nichtmetall, insbesondere der Keramik, der Membran bzw. der Messzelle ist durch die Lötverbindung druckdicht verschlossen.

Ist der Drucksensor Temperaturschwankungen ausgesetzt, dann kann es bei einer zu großen Differenz der Wärmeausdehnungskoeffizienten der zusammengelöteten Materialien zu Verspannungen und daraus resultierenden Problemen kommen. Daher werden bevorzugt Materialien verwendet, deren Wärmeausdehnungskoeffizienten sich nicht all zu sehr unterscheiden. Es gibt hierzu Keramiken mit zu Stahl vergleichbaren Wärmeausdehnungskoeffizienten. Zum Beispiel hat ZrO₂ einen Wärmeausdehnungskoeffizienten, der sich nur geringfügig von demjenigen von Martensit unterscheidet. Andere Keramiken und andere Stahlsorten sind jedoch kostengünstiger. Die sich bei Verwendung eines kostengünstigeren Nichtmetalls, insbesondere Keramik, zum Beispiel Al₂O₃, für die Membran oder für eine Monozelle oder/und eines kostengünstigeren Metalls, z.B. Austenit, für das Druckanschlusselement ergebenden größeren Unterschiede bei den Wärmeausdehnungskoeffizienten können bei einer weiteren vorteilhaften Ausführungsform dadurch gehandhabt werden, dass die Nichtmetall-Membran bzw. die Nichtmetall-Messzelle über ein Zwischenelement mit dem Druckanschlusselement verbunden werden.

Das Zwischenelement ist bevorzugt ein Ring aus einem Metall oder ein ringförmiges Metallplättchen mit einem Wärmekoeffizienten, der wesentlich näher an demjenigen des Nichtmetalls liegt als das Material des Druckanschlusselements. Zum Beispiel besteht die Messzelle aus Al₂O₃ und ist auf einen Zwischenring aus Martensit aufgelötet. Der Zwischenring ist dann vorzugsweise an der der Messzelle abgewandten Seite in druckdichter Weise mit dem Druckanschlusselement ebenfalls stoffschlüssig verbunden, insbesondere druckdicht verschweißt. Der Ring hat vorzugsweise einen größeren Durchmesser als die daran angelötete Keramikmesszelle.

Bei dieser Ausführung dient also nicht das Druckanschlusselement, sondern ein Zwischenelement als metallenes Trägerelement, mit dem die Nichtmetall-Membran bzw. Nichtmetallmesszelle in druckdichter Weise unmittelbar stoffschlüssig verbunden ist.

Ein als Zwischenelement bevorzugt eingesetzter Zwischenring wird vorzugsweise möglichst dünn oder schwach ausgeführt, um Verformungen durch den Ring aufnehmen zu können. Andererseits ist der Ring so dick oder stark, dass die Verschweißung problemlos durchgeführt werden kann.

Bevorzugte Anwendungsgebiete für den erfindungsgemäßen Drucksensor sind Einsätze, bei denen die Verwendung von O-Ringen stören könnte. Es sind somit Hochtemperaturprozesse als auch die Messung unterschiedlich aggressiver Medien möglich. Der Drucksensor lässt sich zum Beispiel überall dort einsetzen, wo Prozesstemperaturen von mehr als 200°C bis 300°C vorkommen können. Selbstverständlich ist der Sensor aber auch bei tieferen Temperaturen einsetzbar und auch bei sehr tiefen Temperaturen, wo O-Ringe spröde werden könnten.

Die Lottrennstelle lässt sich bei der heute bekannten Lottechnik mit Hart-und/oder Aktivloten bis über 1000 bar druckdicht machen, so dass Druckmessbereiche (Nennbereiche) von bis zu 400 bis 600 bar derzeit problemlos erreichbar sind. Die derzeit bevorzugte Lottechnik und hierzu geeignete Materialien werden genauer in der deutschen Patentanmeldung 10 2004 024 920.2 beschrieben, auf die für weitere Einzelheiten ausdrücklich verwiesen wird.

Durch die Erfindung ist bei einem gattungsgemäßen Drucksensor mit einer kostengünstigen Nichtmetall-Membran eine absolute Minimierung der Bestandteile möglich. Dadurch lässt sich der Montageaufwand minimieren. Die Drucksensoren können bei Bedarf industriell in Serie gefertigt werden. Durch die geringere Anzahl von Bauteilen wird auf einfache Art und Weise auch das Risiko von Ausfällen einzelner Bestandteile minimiert, so dass auch die Zuverlässigkeit verbessert wird. Gerade Ausfälle von O-Ringen haben in der Vergangenheit mehrmals zu Ausfällen ganzer Maschinen und auch zu verheerenden Unfällen geführt. Gegenüber durch Elastomere abgedichteten Drucksensoren entfällt bei einem erfindungsgemäßen, durch eine Lotverbindung abgedichteten Drucksensor auch das Problem einer möglichen Materialalterung, so dass auch unter diesem Aspekt die Langlebigkeit und Zuverlässigkeit verbessert wird.

Bei einer besonders bevorzugten Ausführungsform des erfindungsgemäßen Drucksensors erfolgt auch eine elektrische Verbindung zwischen der Keramikmesszelle und einer Auswerteelektronik auf der mediumabgewandten Seite der Nichtmetallmembran bzw. der Nichtmetall-Messzelle - insbesondere Keramikmembran bzw. Keramikmesszelle - über ein Hart- oder Aktivlot, wie dies genauer in der nicht vorveröffentlichten deutschen Patentanmeldung 10 2004 024 920.2-52 beschrieben wird, auf die auch für diesbezügliche weitere Einzelheiten ausdrücklich verwiesen wird. Das Hartlot wird bei dieser vorteilhaften Ausgestaltung nicht nur zum Zusammenfügen von Keramikzelle und Metalldruckanschluss oder Metallgehäuse und zum Ersetzen der sonst bei Keramikzellen üblichen Dichtungen verwendet, darüber hinaus wird mit dem Hartlot auch noch eine besonders feste und langlebige elektrische Verbindung geschaffen. Dabei lassen sich sämtliche Hartlotverbindungen in einem einzelnen Erhitzungsprozess erzeugen, so dass der Drucksensor schnell und kostengünstig herstellbar ist.

Die Auslenkungen von Keramikmembranen wird bevorzugt mit in Dickschichttechnik hergestellten DMS als Wandlereinrichtung in elektrisch verwertbare Signale umgewandelt. Die verfahrensgemäße Vorgehensweise richtet sich nach der zum druckdichten stoffschlüssigen Verbinden von Nichtmetall und Metall einzusetzenden Temperaturen. Wird ein Hartlot mit Löttemperaturen von über etwa 1000°C verwendet, dann werden vorzugsweise zunächst alle Hartlotverbindungen hergestellt und anschließend auf der druckabgewandten Membranseite ein Dickschichtprozess zum Aufbringen der Wandlereinrichtung durchgeführt.

Ausführungsbeispiele der Erfindung werden nachfolgend anhand der beigefügten Zeichnung näher erläutert. Darin zeigt:
- Fig. 1: eine perspektivische Ansicht einer ersten Ausführungsform eines Drucksensors;
- Fig. 2: einen Längsschnitt entlang der Mittelachse durch den Drucksensor von Fig. 1;
- Fig. 3: einen Schnitt vergleichbar von Fig. 2 durch eine zweite Ausführungsform eines Drucksensors;
- Fig. 4: eine Draufsicht auf eine bei der zweiten Ausführungsform eingesetzte Messzelle; und
- Fig. 5: eine perspektivische Teilansicht der zweiten Ausführungsform des Drucksensors nach einem Zwischenschritt im Verlauf seines Herstellverfahrens.

In den Figuren sind zwei Ausführungsformen eines Drucksensors 1 mit einer Keramikmesszelle 2 und einem aus nichtkorrosivem Metall gebildeten Druckanschlusselement 3 dargestellt.

Die Keramikmesszelle 2 ist monolithisch hergestellt. Sie ist etwa kappenförmig oder topfförmig ausgebildet, so dass sie einen einen Stützring 4 bildenden ersten Bereich und einen eine damit einstückig ausgebildete Membran 5 bildenden zweiten Bereich hat. Die Membran 5 ist als Messmembran zur direkten Medienberührung ausgelegt.

Auf einer medienabgewandten Seite 6 ist eine Wandlereinrichtung 7, hier in Dickschichttechnik aufgebracht. Die Wandlereinrichtung 7 ist durch mehrere piezoresistive Elemente, insbesondere Dehnmessstreifen 8, gebildet, die in üblicher Brückenschaltung verschaltet sind. Auslenkungen der Membran 5 werden durch die Dehnmessstreifen 8 erfasst und durch eine Auswerte-und/oder Verstärkungselektronik 9 ausgewertet.

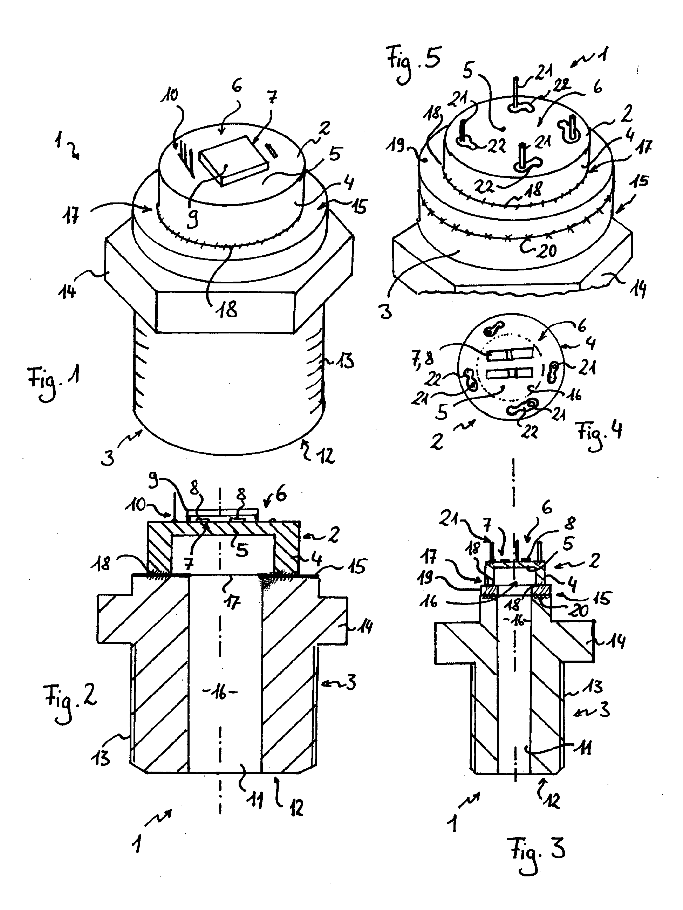

Bei der in Fig. 1 und 2 dargestellten ersten Ausführungsform ist die Auswerte-und/oder Verstärkungselektronik 9 als ASIC oder sonstiger Chip direkt auf der medienabgewandten Seite der Keramikmesszelle 2 angebracht. Die Auswerte-und/oder Verstärkungselektronik 9 lässt sich hier über eine Stiftleiste 10 kontaktieren.

Bei beiden Ausführungsformen hat das aus Metall gebildete Druckanschlusselement 3 eine Durchgangsbohrung 11 und ist dadurch insgesamt rohrförmig ausgebildet. Das Druckanschlusselement 3 trägt an einem ersten Ende 12 ein Gewinde 13, mit dem es an eine das zu messende Medium führende Vorrichtung (nicht dargestellt) angeschlossen werden kann. Ein Werkzeugangriffsbereich 14 vereinfacht dabei das Ein- und Ausdrehen des Drucksensors 1.

An dem dem ersten Ende 12 entgegengesetzten zweiten Ende 15 ist die Keramikmesszelle 2 mit dem Druckanschlusselement 3 so verbunden, dass die Keramikmesszelle 2 die Durchgangsbohrung 11 abschließt. Im Inneren ist so ein Messraum 16 für das zu messende Medium gebildet. Der in diesem Messraum 16 ausgebildete Übergang 17 zwischen Keramik und Metall ist nicht durch eine Dichtung, sondern durch eine ringsum durchgängig geschlossene stoffbündige Verbindung zwischen Metall und Keramik abgedichtet. Dadurch spart man sich sämtliche Dichtungen, insbesondere die sonst übliche Elastomerdichtungen, und zusätzliche Klemmelemente oder Befestigungselement ein. Bei den gezeigten Ausführungsformen ist die Keramikzelle 2 durch eine ringsum geschlossene Hartlotverbindung 18 druckdicht befestigt. Als Hartlot wird zum Beispiel ein AgCuTi-Lot verwendet.

Bei der in den Fig. 1 und 2 dargestellten ersten Ausführungsform des Drucksensors 1 ist der Bereich des Stützrings 4 der Keramikmesszelle 2 direkt an das Druckanschlusselement 3 hartgelötet, so dass das Druckanschlusselement 3 als unmittelbares Trägerelement für die Keramikmesszelle 2 dient. Als Werkstoff für die keramische Monozelle - Keramikmesszelle 2 - dient hierbei ZiO₂. Das Druckanschlusselement 3 ist in dieser Ausführungsform aus martensitischen Stahl gebildet. Beide Materialien haben mit etwa 11 ×10⁻⁶K⁻¹ einen vergleichbaren Wärmeausdehnungskoeffizienten, so dass es auch bei Einsatz in unterschiedlichen Temperaturbereichen nicht zu Verspannungen kommt. Diese Materialien sind jedoch relativ teuer.

Die in den Fig. 3 bis 5 dargestellte zweite Ausführungsform kann dagegen auch bei Einsatz mit wechselnden Temperaturen kostengünstigere Materialien nutzen. Hier ist die Keramikmesszelle 2 aus Al₂O₃ und das Druckanschlusselement 3 aus Austenit (oder aus Martensit) gebildet. Zum Ausgleich unterschiedlicher Wärmeausdehnungen ist als unmittelbares Trägerelement für die Keramikzelle 2 hier ein Zwischenelement in Form eine ringförmigen Metallplättchens 19 eingefügt.

Die Keramikmesszelle 2 ist bei dieser zweiten Ausführungsform mit dem Metallplättchen 19 durch die ringsum geschlossene Hartlotverbindung 18 druckdicht und mechanisch sehr fest verbunden. Das Metallplättchen 19 ist wiederum mit dem Druckanschlusselement 3 in druckdichter Weise mittels einer stoffschlüssigen Verbindung, hier in Form einer ringsum verlaufenden Verschweißung 20 verbunden.

Das Metallplättchen 19 hat einen Durchmesser, der größer ist als der Durchmesser der Keramikmesszelle 2. Das Metallplättchen 19 wird möglichst dünn ausgeführt, damit es zur Kompensation unterschiedlicher Wärmeausdehnungen verformbar ist. Eine Untergrenze für die Dicke des Metallplättchens 19 wird durch das Erfordernis einer sicheren und problemlosen Verschweißbarkeit mit dem Druckanschlusselement 3 gesetzt. Die optimale Dicke lässt sich durch Versuche empirisch ermitteln.

Insgesamt ergibt sich bei den hier dargestellten Ausführungsformen durch die stoffschlüssigen Verbindungen 18, 20 ein praktisch einstückig aus einem Edelstahl-Keramik-Verbund gebildeter Drucksensor, der ohne Dichtungen und zusätzliche Befestigungselemente unmittelbar zum Messen beliebiger unter Druck stehender Medien verwendet werden kann.

Bei dem zweiten Ausführungsbeispiel sind auf der medienabgewandten Seite der Keramikmesszelle 2 noch elektrische Anschlüsse in Form von Kabelendhülsen 21 mittels Hartlot an der Keramik befestigt und auch Leiterbahnen 22 mittels Hartlot gebildet, so wie dies näher in der deutschen Patentanmeldung 10 2004 024 920.2-52 beschrieben und gezeigt ist.

Die verschiedenen Merkmale der hier erläuterten Ausführungsbeispiele sind beliebig miteinander kombinierbar.

Zur Herstellung des Drucksensors wird bevorzugt derart vorgegangen, dass zunächst die stoffschlüssigen Verbindungen 18, 20 hergestellt werden. Die Vorgehensweise zum Herstellen der Hartlotverbindung ist dabei die gleiche wie sie in der vorerwähnten, nicht vorveröffentlichten deutschen Patentanmeldung 10 2004 024 920.2-52 beschrieben ist. Auf diese Patentanmeldung wird für nähere Einzelheiten ausdrücklich Bezug genommen. Eine Kopie der Anmeldung ist der hier vorliegenden Anmeldung beigefügt. Bei dem zum Herstellen der Hartlotverbindung durchgeführten Hartlotverfahren werden, wie in dieser vorherigen Patentanmeldung beschrieben, gleichzeitig auch die elektrischen Verbindungen 21, 22 hergestellt. Der sich danach ergebende Schritt ist in der Fig. 5 dargestellt.

Das Hartlöten erfolgt beispielsweise bei Temperaturen im Bereich von etwa 800 bis 1000°C. Nach dem Hartlöten werden dann auf der medienabgewandten Seite 6 die Dehnmessstreifen 8 in Dickschichttechnik bei etwa 800 bis 850°C aufgebracht. Anschließend wird der die Auswerte- und/oder Verstärkungselektronik 9 bildende Chip aufgeklebt oder gelötet.

Für Hochtemperaturanwendungen oberhalb von ca. 200°C wird anstelle des auf der Messzelle angebrachten Chips eine komplett außerhalb angeordnete Auswerte- und/oder Verstärkungselektronik (nicht dargestellt) verwendet.

Bei einigen Hartloten sind auch geringere Lottemperaturen (zum Beispiel um die 600 bis 800°C oder auch weniger) möglich. Insbesondere in solchen Fällen kann das Hartlöten nach dem Dickschichtverfahren erfolgen, oder es können entsprechend mit DMS vorgefertigte Keramikmesszellen 2 verwendet werden.

In einer nicht dargestellte Ausführung kann anstelle der Keramikmesszelle 2 auch eine bloße Keramikmessmembran ohne Stützring direkt mit dem Trägerelement 3 oder 19 stoffschlüssig druckdicht verbunden werden.

### Bezugszeichenliste:

- 1: Drucksensor
- 2: Keramikmesszelle
- 3: Druckanschlusselement
- 4: Stützring (Keramik)
- 5: Messmembran (Keramik)
- 6: medienabgewandte Seite
- 7: Wandlereinrichtung
- 8: Dehnmessstreifen
- 9: Auswerteelektronik
- 10: Stiftleiste
- 11: Durchgangsbohrung
- 12: erstes Ende (Anschlussende)
- 13: Gewinde
- 14: Werkzeugangriffsbereich
- 15: zweites Ende (medienabgewandtes Ende)
- 16: Messraum
- 17: Keramik-Metall-Übergang
- 18: Hartlotverbindung
- 19: Metallplättchen (Zwischenelement)
- 20: Verschweißung
- 21: Kabelendhülsen (elektrische Verbindung)
- 22: Leiterbahnen

## Patentansprüche

1. Drucksensor (1) mit:
einer aus Nichtmetall gebildeten Membran (5), welche mit unter Druck stehendem, zu messendem Medium beaufschlagbar ist,
**dadurch gekennzeichnet,**
**dass** ein dem zu messenden Medium ausgesetzter Nichtmetall-Metall-Übergang (17) durch eine Hartlotverbindung (18) oder Aktivlotverbindung druckdicht abgeschlossen ist.

2. Drucksensor nach Anspruch 1,
**dadurch gekennzeichnet,**
**dass** die Membran (5) aus Keramik gebildet ist und dass der durch Aktiv- oder Hartlöten abgedichtete Übergang ein Keramik-Metall-Übergang (17) ist.

3. Drucksensor nach Anspruch 2,
**dadurch gekennzeichnet**
**dass** die Membran (5) Teil einer Keramikmesszelle (2) ist, die die aus Keramik gebildete Messmembran (5) und einen aus Keramik gebildeten Stützkörper (4) aufweist, wobei der Stützkörper (4) mittels der Hartlotverbindung (18) druckdicht mit einem aus Metall gebildeten Trägerelement (3, 19) verbunden ist.

4. Drucksensor nach Anspruch 3,
**dadurch gekennzeichnet,**
**dass** das Trägerelement ein Druckanschlusselement (3) ist, mittels dem der Drucksensor (1) an eine das zu messende Medium enthaltende Vorrichtung oder Einrichtung anschließbar ist.

5. Drucksensor nach Anspruch 3,
**dadurch gekennzeichnet,**
**dass** das Trägerelement ein Zwischenring (19) ist, der anderen Endes mit einem Druckanschlusselement (3) verbunden ist, mittels dem der Drucksensor (1) an eine das zu messende Medium enthaltende Vorrichtung oder Einrichtung anschließbar ist.

6. Drucksensor nach einem der voranstehenden Ansprüche,
**dadurch gekennzeichnet,**
**dass** das Trägerelement (3, 19) aus martensitischem Stahl gebildet ist.

7. Drucksensor nach Anspruch 5 und Anspruch 6,
**dadurch gekennzeichnet,**
**dass** das Druckanschlusselement (3) aus austenitischem oder martensitischem Stahl gebildet ist.

8. Drucksensor nach Anspruch 5 oder Anspruch 7 oder nach Anspruch 6, soweit auf Anspruch 5 zurückbezogen,
**dadurch gekennzeichnet,**
**dass** der Zwischenring (19) mit dem Druckanschlusselement (3) druckdicht verschweißt ist.

9. Drucksensor nach einem der voranstehenden Ansprüche,
**dadurch gekennzeichnet,**
**dass** unmittelbar auf der druckabgewandten Seite (6) der Membran (5) eine Wandlereinrichtung (7) zur Umwandlung einer Membranauslenkung in ein elektrisch oder elektronisch auswertbares Signal in Dickschichttechnik aufgebracht ist.

10. Drucksensor nach einem der voranstehenden Ansprüche,
**gekennzeichnet durch**
wenigstens ein elektrisches Anschlusselement (21, 22), das mittels Hart- oder Aktivlot hergestellt und/oder mittels Hart- oder Aktivlot mit einem Bauteil (2) des Drucksensors (1) mechanisch und elektrisch verbunden ist.

11. Verfahren zum Herstellen eines Drucksensors (1), bei welchem eine aus Nichtmetall gebildete Messmembran (5) mit einem aus Metall gebildeten Druckanschlusselement (3) verbunden wird,
**dadurch gekennzeichnet,**
**dass** die Nichtmetall-Messmembran (5) mit dem metallenen Druckanschlusselement (3) in druckdichter Weise stoffschlüssig verbunden wird.

12. Verfahren nach Anspruch 11,
**dadurch gekennzeichnet,**
**dass** als Nichtmetall-Messmembran (5) eine an einer Keramikmesszelle (2) einstückig ausgebildete Keramikmembran verwendet wird und
**dass** die Keramikmesszelle (2) mittelbar oder unmittelbar an das Druckanschlusselement (3) in druckdichter Weise hart- oder aktivgelötet wird.

13. Verfahren nach Anspruch 11 oder 12,
**dadurch gekennzeichnet,**
**dass** das Hart- oder Aktivlöten mittelbar über Zwischenlage eines metallenen Zwischenelements (19) erfolgt, wobei das Zwischenelement einen Wärmeausdehnungskoeffizienten hat, der näher an dem Wärmeausdehnungskoeffizienten des Nichtmetalls der Membran (5) liegt als der Wärmeausdehnungskoeffizient des Druckanschlusselements (3).

14. Verfahren nach Anspruch 13,
**dadurch gekennzeichnet,**
**dass** das Zwischenelement (19) mit dem Druckanschlusselement (3) druckdicht stoffschlüssig verbunden wird.

15. Verfahren zum Herstellen eines Drucksensors nach einem der Ansprüche 1 bis 10, mit der folgenden Reihenfolge von Schritten
a) Bereitstellen einer keramischen Membran (5) und eines metallenen Trägerelements (3, 19),
b) lückenloses Aufbringen eines Hartlotes oder Aktivlotes an einer rings um die Keramikmembran verlaufenden Fügelinie zwischen Membran (5) und Trägerelement (3, 19), um diese druckdicht zu verbinden, und
c) Erhitzen der mit dem Trägerelement (3, 19) an der Fügelinie zusammengefügten Keramikmembran (5) auf eine Hartlöt-Temperatur zum Durchführen des Hartlotprozesses.

16. Verfahren nach Anspruch 15,
**gekennzeichnet durch** den nach Schritt c) erfolgenden Schritt
d) Aufbringen einer Wandlereinrichtung (7) zur Umwandlung einer Membranauslenkung in ein elektrisch oder elektronisch auswertbares Signal in Dickschichttechnik auf eine dem Trägerelement (3, 19) abgewandte Seite (6) der Membran (5).

17. Verfahren nach einem der voranstehenden Ansprüche,
**dadurch gekennzeichnet,**
**dass** das Hart- oder Aktivlot zusätzlich zum Herstellen elektrischer Verbindungen und/oder elektrischer Leiterbahnen (21, 22) verwendet wird.
